# EUROPÄISCHE PATENTSCHRIFT

(11) **EP 0 639 678 B1**
(45) Veröffentlichungstag und Bekanntmachung des Hinweises auf die Patenterteilung: **12.07.2000**
(21) Anmeldenummer: 94100629.8
(22) Anmeldetag: 18.01.1994
(51) Int. Cl.: E04B 1/86, E04F 13/08, E04B 9/04, B32B 5/22, B41M 1/34, B44C 5/04, B32B 5/24, B41M 5/035

(54) **Dekorierte Akustikplatte und Verfahren zum Herstellen einer dekorierten Akustikplatte**
Decorated acoustic panel and method of making the same
Panneau acoustique décoré et procédé de fabrication d'un tel panneau

(30) Priorität: 19.08.1993 DE 9312465 U
(43) Veröffentlichungstag der Anmeldung: 22.02.1995
(73) Patentinhaber: Wilhelmi Werke Aktiengesellschaft, 35633 Lahnau (DE)
(72) Erfinder: Feht, Friedrich, D-35578 Wetzlar (DE); Bender, Klaus, Dr., D-35444 Biebertal (DE); Fiedler, Bernd, D-35578 Wetzlar (DE)
(74) Vertreter: Missling, Arne, Dipl.-Ing.

(56) Entgegenhaltungen:
- DE-A- 2 448 951
- DE-A- 2 642 350
- DE-B- 1 253 894
- DE-U- 1 745 795
- DE-U- 9 300 151

## Beschreibung

Die Erfindung betrifft eine dekorierte Akustikplatte, die mit einer Raumwand bzw. -decke verbindbar ist und aus einer auf einer oder auf beiden Seiten mit einer porigen Oberfläche versehenen porösen Trägerplatte zur Schall- und/oder Wärmedämmung und mindestens einer auf die Trägerplatte aufbringbaren, aus einem Vlies oder einem Gewebe von Glasfasern gebildeten dünnen Deckschicht besteht, die im Transferdruckverfahren dekorierbar ist, sowie ein Verfahren zur Herstellung einer solchen Akustikplatte.

Akustikplatten werden in der Regel vor ihrer Befestigung an der Raumwand im allgemeinen mit einem aus einer speziellen Akustikfarbe bestehenden Farbüberzug versehen, indem die Deckschicht im Spritzverfahren üblicherweise einfarbig überzogen wird. Dabei ist darauf zu achten, daß kein in der Fläche geschlossener Farbüberzug gebildet wird, weil die Akustikplatte sonst ihre physikalische Aufgabe der Schallabsorption nicht wahrzunehmen vermag. Die Beschränkung auf einen vorwiegend flächendeckend-einfarbigen Anstrich wird dabei zunehmend als Mangel empfunden; es ist vielmehr erwünscht, auch Dekore mit ornamentalen und/oder figürlichen Mustern aufzubringen, um neben den thermisch/akustischen auch raumgestalterisch-optische Effekte durch die Akustikplatte zu realisieren.

Aus der DE 26 42 350 A1 ist ein Verfahren zum Bedrucken von Flächengebilden im Transferdruckverfahren bekannt, bei dem die Flächengebilde einer speziellen Behandlung unterzogen werden, weil anders der Farbstoff nach dem Transfer nicht fixierbar und durch Migration in das Flächengebilde das Dekor nur unscharf ausführbar ist. Die spezielle Behandlung besteht dabei darin, daß die Flächengebilde vor oder während des Transfers mit einem zu dem Farbstoff affinen Kunststoff versehen werden und der Transfer unter trockener Wärme vor sich geht. Ein derartiger, auch bei Vliesstoffen anwendbarer, geschlossener Kunststoffüberzug wird bevorzugt aus einem Thermoplast hergestellt. Für eine Akustikplatte ist er allerdings nicht geeignet, weil deren Funktion als Schallabsorber dabei nicht mehr gewährleistet werden kann.

Die Erfindung hat sich deshalb die Aufgabe gestellt, eine Akustikplatte der eingangs näher bezeichneten Art so auszuführen, daß sie dekorierbar ist und dabei ihre Eigenschaft zur Schallabsorption trotzdem voll erhalten bleibt.

Erfindungsgemäß wird die Aufgabe dadurch gelöst, daß die einzelnen Glasfasern der Deckschicht allseitig mit einer dünnen Trägerschicht eines druckfarben-affinen Kunststoffes so überzogen sind, daß die Trägerschicht zwischen den Glasfasern lückenhaft bleibt in einem Umfang, daß die Dekoration visuell vollständig ausgeführt erscheint und gleichwohl die auf die Deckschicht auftreffende Schall- und Wärmestrahlung von der Trägerplatte absorbierbar ist. Die Trägerschicht besteht vorteilhaft aus einem Thermoplast.

Eine solche Akustikplatte unterscheidet sich hinsichtlich ihrer Schall- und Wärmedämmung nur wenig von einer reinen Akustikplatte, bietet aber die Möglichkeit, verstärkt als Mittel der Raumdekoration eingesetzt zu werden, und zwar über das Maß hinaus, das bisher durch einen einfarbigen Spritzauftrag auf die Deckschicht möglich gewesen ist.

Eine solche dekorierte Akustikplatte ist erfindungsgemäß durch ein Verfahren herstellbar, bei dem die Glasfasern zunächst mit der Trägerschicht überzogen werden und danach aus den überzogenen Glasfasern die Deckschicht gebildet wird. Auf diese Weise kann in überraschend einfacher Weise verhindert werden, daß das Aufbringen der Trägerschicht und der anschließende Auftrag des Dekors zu einer lückenlos geschlossenen Oberfläche auf der Deckschicht und so zu einer Beeinträchtigung der Wirkungsweise der Akustikplatte führt.

Der Transfer kann dabei entweder dadurch erfolgen, daß die Deckschicht zuerst mit der Trägerschicht versehen, daran anschließend auf der Trägerplatte befestigt und schließlich im Transferdruckverfahren dekoriert wird; es ist aber stattdessen auch möglich, die Deckschicht zunächst mit der Trägerschicht zu versehen, sie danach im Transferdruckverfahren zu dekorieren und erst abschließend auf der Trägerplatte zu befestigen.

Im einzelnen ist es besonders vorteilhaft, wenn die Deckschicht dekoriert wird, indem sie mit einem Transferdruckträger belegt und das aus einem sublimierbaren Dispersionsfarbstoff bestehende Dekor unter relativ geringem Druck und mittels Wärme von dem Transferdruckträger auf die Trägerschicht transferiert wird, und wenn in bevorzugter Ausführung dabei der Transfer so erfolgt, daß weniger als 3,5 g/m² Dispersionsfarbstoff auf der Deckschicht sublimiert, beispielsweise zwischen 2,5 und 3,0 g/m².

Besonders gute Ergebnisse lassen sich erzielen, wenn das Dekor bei etwa 150°C transferiert wird, wobei der Transferdruckträger der Wärme- und Druckbehandlung vorteilhaft etwa 90 Sekunden lang ausgesetzt ist.

Das erfindungsgemäß ausgestaltete Transferdruckverfahren gestattet eine außerordentlich wirtschaftliche Herstellung einer beliebig dekorierten, funktionstüchtigen Akustikplatte; die Einschränkung auf eine einfarbige, dekorlose Ausführung ist damit weggefallen.

Ohne Schwierigkeiten kann eine solche Akustikplatte fernerhin in schwer entflammbarer Ausführung hergestellt werden, wenn das aus Gründen der Brandsicherheit vorgeschrieben ist.

Die Erfindung wird nachstehend an Hand der Zeichnung an einem Ausführungsbeispiel näher erläutert. Es zeigen
- Fig.1: eine erfindungsgemäße Akustikplatte mit einer porösen Trägerplatte und
- Fig.2: eine erfindungsgemäße Akustikplatte mit einer gelochten Trägerplatte.

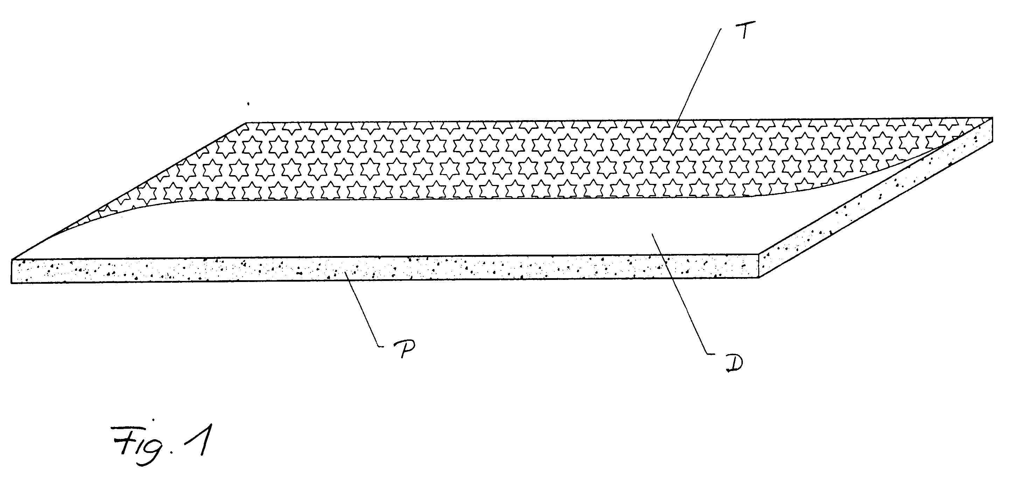

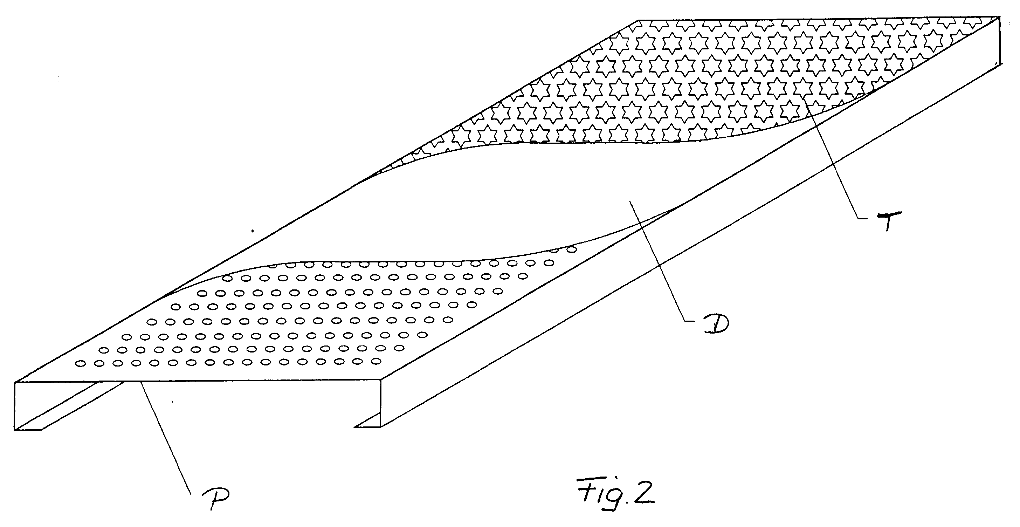

Während dabei die homogen poröse Trägerplatte in Fig.1 beispielsweise als Holz-Spanplatte ausgebildet ist oder aus einem geschäumten Werkstoff besteht, kann die gelochte Trägerplatte der Fig.2 aus einem dünnen Metallblech hergestellt sein, dessen Widerstandsmoment in der erkennbaren Weise durch Abkantung zu Rahmenprofilen bestimmt wird. In beiden Beispielen ist die Trägerplatte sichtseitig mit einer Deckschicht in erfindungsgemäßer Weise versehen, auf welche der Oberflächendekor durch Transferdruck aufbringbar ist. Die Einzelheiten eines solchen Verfahrens sind dabei fachüblich, so daß auf eine ausführliche Darstellung verzichtet werden kann, zumal sie in keinem unmittelbaren Zusammenhang mit der Erfindung stehen.

## Patentansprüche

1. Dekorierte Akustikplatte, die mit einer Raumwand bzw. -decke verbindbar ist und aus einer auf einer oder auf beiden Seiten mit einer porigen Oberfläche versehenen porösen Trägerplatte zur Schall- und/oder Wärmedämmung und mindestens einer auf die Trägerplatte aufbringbaren, aus einem Vlies oder einem Gewebe von Glasfasern gebildeten dünnen Deckschicht besteht, die im Transferdruckverfahren dekorierbar ist,
dadurch gekennzeichnet, daß
die einzelnen Glasfasern der Deckschicht allseitig mit einer dünnen Trägerschicht eines druckfarben-affinen Kunststoffes so überzogen sind, daß die Trägerschicht zwischen den Glasfasern lückenhaft bleibt in einem Umfang, daß die Dekoration visuell vollständig ausgeführt erscheint und gleichwohl die auf die Deckschicht auftreffende Schall- und Wärmestrahlung von der Trägerplatte absorbierbar ist.

2. Dekorierte Akustikplatte nach Anspruch 1, dadurch gekennzeichnet, daß die Trägerschicht aus einem Thermoplast besteht.

3. Verfahren zur Herstellung einer dekorierten Akustikplatte nach Anspruch 1 oder 2, dadurch gekennzeichnet, daß die Glasfasern mit der Trägerschicht überzogen werden und danach aus den überzogenen Glasfasern die Deckschicht gebildet wird.

4. Verfahren nach Anspruch 3, dadurch gekennzeichnet, daß die Deckschicht
a) mit der Trägerschicht versehen,
b) auf der Trägerplatte befestigt und
c) im Transferdruckverfahren dekoriert wird.

5. Verfahren nach Anspruch 3, dadurch gekennzeichnet, daß die Deckschicht
a) mit der Trägerschicht versehen,
b) im Transferdruckverfahren dekoriert und
c) auf der Trägerplatte befestigt wird.

6. Verfahren nach Anspruch 4 oder 5, dadurch gekennzeichnet, daß die Deckschicht dekoriert wird, indem sie mit einem Transferdruckträger belegt und das aus einem sublimierbaren Dispersionsfarbstoff bestehende Dekor unter relativ geringem Druck und mittels Wärme von dem Transferdruckträger auf die Trägerschicht transferiert wird.

7. Verfahren nach Anspruch 6, dadurch gekennzeichnet, daß der Transfer so erfolgt, daß weniger als 3,5 g/m² Dispersionsfarbstoff auf der Deckschicht sublimiert.

8. Verfahren nach Anspruch 7, dadurch gekennzeichnet, daß zwischen 2,5 und 3,0 g/m² Dispersionsfarbstoff auf der Deckschicht sublimiert.

9. Verfahren nach einem der Ansprüche 6 bis 8, dadurch gekennzeichnet, daß das Dekor bei etwa 150°C transferiert wird.

10. Verfahren nach einem der Ansprüche 6 bis 9, dadurch gekennzeichnet, daß der Transferdruckträger der Wärme- und Druckbehandlung etwa 90 Sekunden lang ausgesetzt ist.

## Claims

1. A decorated acoustic panel connectable to a room wall or ceiling and comprising a porous supporting plate provided with a porous surface on one or both sides for sound and / or thermal insulation and at least one thin covering layer which is applicable to the supporting plate and formed from a non-woven fabric or a woven fabric of glass fibres and which can be decorated by transfer printing, characterised in that the individual glass fibres of the covering layer are coated all over with a thin carrier layer of an ink-affinitive plastics so that the carrier layer remains porous between the glass fibres to an extent such that the decoration appears visually to be complete, but the sound and thermal radiation striking the covering layer is nevertheless absorbable by the supporting plate.

2. A decorated acoustic panel according to claim 1, characterised in that the carrier layer comprises thermoplastics.

3. A method of manufacturing a decorated acoustic panel according to claim 1 or 2, characterised in that the glass fibres are coated with the carrier layer, and the covering layer is subsequently formed from the coated glass fibres.

4. A method according to claim 3, characterised in that the covering layer
a) is provided with the carrier layer,
b) is attached to the supporting plate, and
c) is decorated by transfer printing.

5. A method according to claim 3, characterised in that the covering layer
a) is provided with the carrier layer,
b) is decorated by transfer printing, and
c) is attached to the supporting plate.

6. A method according to claim 4 or 5, characterised in that, for decoration of the covering layer, the latter is covered with a transfer printing substrate, and the decoration, comprising a sublimable disperse dye, is transferred from the transfer printing substrate to the carrier layer under relatively low pressure and by means of heat.

7. A method according to claim 6, characterised in that the transfer is carried out in such a manner that less than 3.5 g/m² of disperse dye is sublimed onto the covering layer.

8. A method according to claim 7, characterised in that between 2.5 g/m² and 3.0 g/m² of disperse dye is sublimed onto the covering layer.

9. A method according to any one of claims 6 to 8, characterised in that the decoration is transferred at approximately 150°C.

10. A method according to any one of claims 6 to 9, characterised in that the transfer printing substrate is subjected to heat and pressure treatment for approximately 90 seconds.

## Revendications

1. Plaque acoustique décorée qui peut être reliée à une paroi ou un plafond d'une pièce et est composée d'une plaque porteuse poreuse pourvue d'une surface poreuse sur une ou les deux faces pour l'isolement sonore et/ou thermique et d'au moins une couche de couverture mince formée d'un non-tissé ou d'un tissu de fibres de verre qui peut être placé sur la plaque porteuse, couche porteuse qui peut être décorée suivant le procédé d'impression par transfert,
caractérisé en ce que les différentes fibres de verre de la couche de couverture sont recouvertes de tous côtés d'une couche porteuse mince d'un tissu artificiel affine aux encres d'imprimerie de telle façon que la couche porteuse reste pleine de lacunes entre les fibres de verre dans une mesure telle que la décoration apparaît visuellement comme étant complètement exécutée et également le rayonnement sonore et thermique frappant la couche de couverture peut être absorbé par la plaque porteuse.

2. Plaque acoustique décorée selon la revendication 1, caractérisée en ce que la couche porteuse est constituée d'une matière thermoplastique.

3. Procédé de fabrication d'une plaque acoustique décorée selon la revendication 1 ou 2, caractérisé en ce que les fibres de verre sont recouvertes par la couche porteuse et que, ensuite, la couche de couverture est formée des fibres de verre recouvertes.

4. Procédé selon le revendication 3, caractérisé en ce que la couche de couverture
a) est pourvue de la couche porteuse,
b) est fixée sur la plaque porteuse et
c) est décorée selon le procédé d'impression par transfert.

5. Procédé selon la revendication 3, caractérisé en ce que la couche de couverture
a) est pourvue de la couche porteuse,
b) est décorée selon le procédé d'impression par transfert et
c) est fixée sur la plaque porteuse.

6. Procédé selon la revendication 4 ou 5, caractérisé en ce que la couche de couverture est décorée, en étant enduite d'un porteur d'impression par transfert et le décor constitué d'un colorant de dispersion sublimable est transféré sous une pression relativement faible et au moyen de la chaleur du porteur d'impression par transfert sur la couche porteuse.

7. Procédé selon la revendication 6, caractérisé en ce que le transfert se fait de telle manière que moins de 3,5 g/m² de colorant de dispersion se sublime sur la couche de couverture.

8. Procédé selon la revendication 7, caractérisé en ce que entre 2,5 et 3,0 g/m² de colorant de dispersion se sublime sur la couche de couverture.

9. Procédé selon l'une des revendications 6 à 8, caractérisé en ce que le décor est transféré à environ 150°C.

10. Procédé selon l'une des revendications 6 à 9, caractérisé en ce que le porteur d'impression par transfert est exposé au traitement thermique et à la pression pendant environ 90 secondes.
